# EUROPEAN PATENT APPLICATION

(11) **EP 1 130 256 A1**
(43) Date of publication of application: **05.09.2001**
(21) Application number: 01200681.3
(22) Date of filing: 22.02.2001
(51) Int. Cl.: F03D 11/04

(54) **Trussed pylon for carrying a wind turbine**

(30) Priority: 22.02.2000 NL 1014463
(71) Applicant: N.V. Kema, 6812 AR Arnhem (NL)
(72) Inventor: Semplonius, Hendrik, 6957 AN Laag Soeren (NL); Hutting, Hendrik Kornelis, 6602 XA Wijchen (NL); Rikken, Jacobus Fredericus, 6922 NE Duiven (NL)
(74) Representative: Eveleens Maarse, Pieter

(57) **Abstract**

Trussed pylon for carrying a wind turbine, comprising vertical, horizontal and diagonal elements, wherein the horizontal and vertical elements are rigid and the diagonal elements are adapted to absorb tensile forces, wherein the diagonal elements of the trussed pylon are placed under bias.

The invention also relates to a trussed pylon which has a rigidity differing in the height.

The invention finally relates to a trussed pylon, the rigidity of which can be changed for at least a part of the pylon.

## Description

The invention relates to a trussed pylon for carrying a wind turbine, comprising elements extending substantially vertically, elements extending substantially horizontally and diagonal elements, wherein the horizontal and vertical elements are rigid and the diagonal elements are adapted to absorb tensile forces.

A wind turbine is understood to mean a combination of a rotor and a generator, optionally together with a gearbox.

Such pylons are generally known, for instance from US-A-4 323 331.

In these prior art trussed constructions the diagonal elements are dimensioned to absorb pressure and tensile forces. In order to absorb pressure forces the elements have to be resistant to buckling, so that they have to be dimensioned more heavily than is absolutely necessary to absorb forces.

The object of the invention is to provide such a pylon which is cheaper in construction.

This objective is achieved inter alia in that the diagonal elements of the trussed pylon are placed under bias tension.

This measure has the result that the diagonal elements only have to be dimensioned for absorbing tensile stresses and perhaps small compression stresses. The diagonal elements can thus be take a light form. They do not have to be dimensioned against buckling, or hardly so, so that a weight-saving is obtained or the elements can be manufactured more cheaply.

According to a first preferred embodiment the bias tension of the elements is chosen such that the bias tension in the diagonal elements is maintained under any anticipated design load.

Buckling loads in the diagonal elements are hereby wholly avoided, so that they only have to be dimensioned for tensile stresses.

It is otherwise pointed out that the wind turbine can cause the generation of low-frequency mechanical vibrations in the trussed construction. This not only results in excessive wear of the construction as a consequence of for instance fatigue phenomena, but also in strongly varying loads in the structural elements of the trussed construction, particularly also in the diagonal elements. Fatigue is reduced by the above stated measures since in the first case changes between pressure and tension in the diagonal elements become less frequent and in the second case are wholly avoided.

It is pointed out here that the pylon must of course have sufficient strength to bear the weight of the wind turbine. The pylon must furthermore be sufficiently strong to be able to withstand the forces exerted by the wind.

With the measures according to the invention a trussed pylon can be obtained which on the one hand is sufficiently slack to obtain a low natural frequency of the construction, but which on the other hand is strong enough to withstand the forces exerted thereon. This requirement is contrary to the generally employed construction principles for trussed pylons. Due to the low natural frequency, lower than the frequency with which the blades of the wind turbine pass the pylon, cyclic thrust from the rotor is absorbed by the mass of the housing and the inertia of the rotor and transmitted to the pylon in attenuated form. The pylon can hereby be given a lighter and cheaper construction.

According to a second embodiment the trussed pylon has a rigidity differing in the height.

This measure has the advantage that the rigidity of the pylon can be adjusted to the diverse conditions to which it is subjected. It is thus possible for instance to give such a trussed pylon a more rigid construction on the underside than on the upper side, so that the vibrations generated by the wind turbine permeate as little as possible to the lower part of the construction. This lower part of the construction can then be wholly constructed for the purpose of obtaining the required strength and, if it is placed at sea, for the purpose of obtaining the required resistance to wave action. The great rigidity of the lower part of the trussed pylon prevents waves being able to set the wind turbine into motion, whereby the rotor is not loaded with forces which are the result of a response to movements generated by waves.

It is also noted that it is attractive to place wind turbines at sea in respect of the wind prevailing there.

There are diverse possibilities for constructing a trussed pylon with a rigidity differing in the height.

According to a first variant the cross-section of the diagonal elements of the trussed pylon differs in the height.

According to a second variant the strength of the material applied in the diagonal elements of the trussed pylon differs in the height.

According to a third variant of this configuration the angle of the diagonal to the horizontal differs in the height.

According to a fourth variant of this configuration the number of parallel arranged diagonal elements of the trussed pylon differs in the height.

It is further possible to embody parallel diagonal elements such that they are concentric. A jacket is then created which is adapted to absorb tensile forces, as well as a core with the same function.

According to yet another embodiment the rigidity of the pylon can be changed for at least a part of the pylon.

It is hereby possible to adapt the configuration of the pylon to the anticipated conditions; when these change, or when they do not correspond with the values assumed during the construction, it is possible to adjust the rigidity of the pylon at a later stage. This measure is of course particularly, though not exclusively, applicable to wind turbines placed at sea. The forces to which these are exposed are strongly variable and are to some extent predictable in the short term.

It is pointed out here that the measure of changing the natural frequency can also be applied to pylons wherein the diagonal elements are dimensioned to absorb tensile and pressure forces.

According to a preferred embodiment it is even possible to have the changes in the rigidity take place continuously, which is for instance attractive when the wave frequency or the rotation speed change as a result of a change in the wind force. Resonance of the construction can hereby be prevented at all times, whereby the construction can be given a lighter and cheaper structure.

Structurally, such a situation can be obtained when the plurality of elements comprise parallel connections which are connected to the trussed pylon by means of controllable couplings.

This variant can be applied in an elegant manner particularly when concentric configurations are applied for the diagonal pylon elements.

These latter measures can likewise be applied to pylon constructions, wherein the diagonal elements are dimensioned to absorb tensile and pressure forces.

Other attractive preferred embodiments are specified in the remaining sub-claims.

The present invention will be elucidated hereinbelow with reference to the figures, in which:
figure 1 is a side view of a trussed pylon according to the present invention; and
figure 2 is a perspective view of a second embodiment of a trussed pylon according to the present invention.

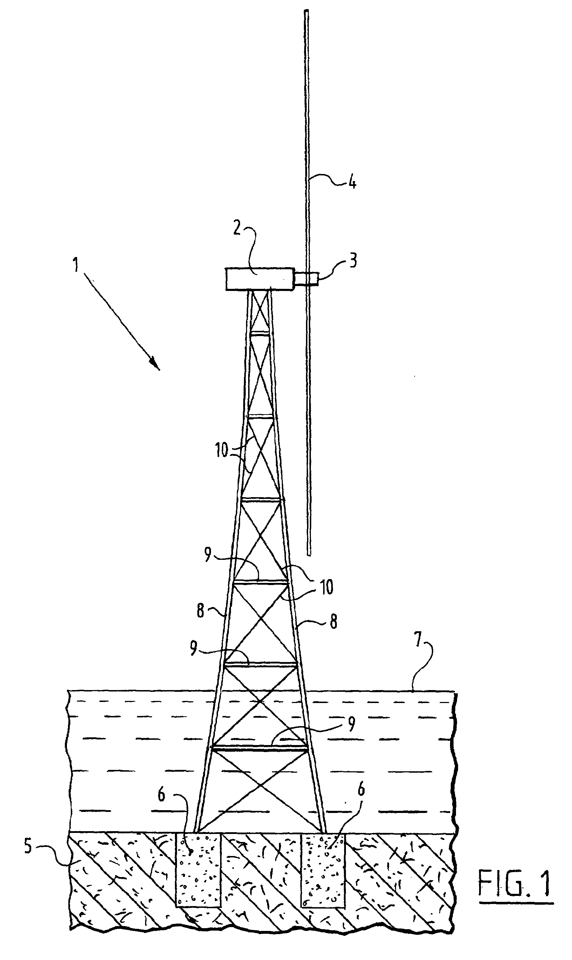

Figure 1 shows a trussed pylon 1 on which is placed a generator 2, on the shaft 3 of which a rotor 4 is placed. The trussed pylon is placed on the seabed 5. Foundation elements 6 are placed in seabed 5 to support the pylon.

The entire trussed pylon herein has a height of about 80 metres, of which a quarter, about 20%, is situated below water level 7.

It will otherwise be apparent that the invention is not limited to pylons of this dimension; it is equally applicable in smaller or larger pylons and in pylons with a larger or smaller part of their length standing in the water, or even pylons which are on dry land.

The trussed pylon consists of edge elements 8 which are connected by horizontal elements 9. Diagonal elements 10 are arranged between the junctions of edge elements 8 and horizontal elements 9. The dimensioning of the construction is herein such that the diagonal elements are normally only adapted to absorb tensile forces. It is conceivable here that, for instance in extreme situations, the diagonal elements are loaded with pressure forces. The dimensioning must of course be adapted for this purpose. As stated above, it is however more attractive to dimension the trussed construction such that the diagonal elements are always loaded with tensile forces, even in the most extreme loading situations. It is then no longer necessary to dimension for buckle at all, while the increase in the tensile stress in the diagonals, i.e. a greater bias, has only a small influence on the dimensioning.

By making variations in the cross-section, material and the connection to the junctions, these measures further facilitate adjustment of the rigidity of the construction to the use in question. As a result it is possible, particularly for the shown embodiment, to make the upper part of the pylon slacker, i.e. with a lower natural frequency, and to make the lower part of the pylon more rigid, i.e. with a higher natural frequency.

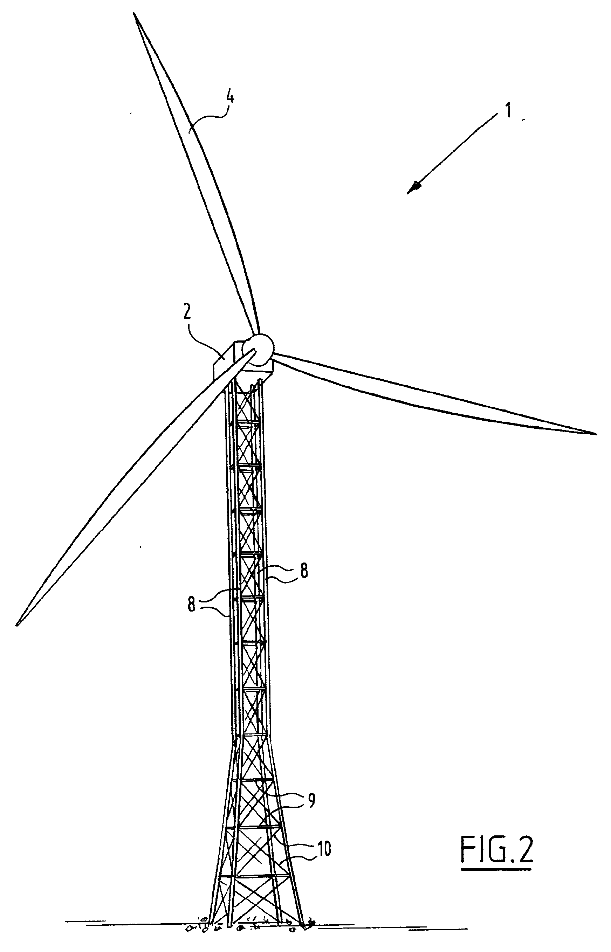

The configuration shown in figure 1 has continuous edge elements 8. It is however also possible, as shown in figure 2, to make use of an initially rectangular configuration and thereunder a substantially pyramid-shaped configuration. This configuration has the advantage of already having a greater rigidity on the bottom side than on the top side without further measures, for instance in respect of the properties of the diagonals.

Particularly for applications at sea, use is preferably made of concrete for the vertical and horizontal elements. A high degree of resistance to the marine environment is hereby obtained, while it is easy to embody the dimensioning such that the load required for concrete, which will be formed solely by pressure, is obtained for the concrete elements. Although the application of concrete does not make the construction lighter, the construction does become cheaper.

Such a configuration is thus particularly suitable for the field of application outlined here.

## Claims

1. Trussed pylon for carrying a wind turbine, comprising elements extending substantially vertically, elements extending substantially horizontally and diagonal elements, wherein the horizontal and vertical elements are rigid and the diagonal elements are adapted to absorb tensile forces, **characterized in that** the diagonal elements of the trussed pylon are placed under bias tension.

2. Trussed pylon as claimed in claim 1, **characterized in that** the bias tension of the elements is chosen such that the bias tension in the diagonal elements is maintained under any anticipated design load.

3. Trussed pylon as claimed in claim 1 or 2, **characterized in that** the trussed pylon has a rigidity differing in the height.

4. Trussed pylon as claimed in claim 2 or 3, **characterized in that** the cross-section of the diagonal elements of the trussed pylon differs in the height.

5. Trussed pylon as claimed in claim 2, 3 or 4, **characterized in that** the strength of the material applied in the diagonal elements of the trussed pylon differs in the height.

6. Trussed pylon as claimed in claim 2, 3, 4 or 5, **characterized in that** the angle of the diagonal to the horizontal differs in the height.

7. Trussed pylon as claimed in claim 2, 3, 4, 5 or 6, **characterized in that** the number of parallel arranged diagonal elements of the trussed pylon differs in the height.

8. Trussed pylon as claimed in claim 7, **characterized in that** at least some of the parallel arranged diagonal elements are placed concentrically.

9. Trussed pylon as claimed in any of the foregoing claims, **characterized in that** the rigidity of the pylon can be changed for at least a part of the pylon by connecting and disconnecting diagonal elements.

10. Trussed pylon as claimed in claim 7, 8 or 9, **characterized in that** the plurality of elements comprise parallel connections which are connected to the trussed pylon by means of controllable couplings.

11. Trussed pylon as claimed in any of the foregoing claims, **characterized in that** the pylon is placed at sea.

12. Trussed pylon as claimed in any of the foregoing claims, **characterized in that** the elements extending substantially vertically are manufactured from concrete.

13. Trussed pylon as claimed in claim 12, **characterized in that** the horizontal elements are manufactured from concrete.
